# EUROPÄISCHE PATENTSCHRIFT

(11) **EP 4 397 166 B1**
(45) Veröffentlichungstag und Bekanntmachung des Hinweises auf die Patenterteilung: **21.10.2026**
(21) Anmeldenummer: 24160535.1
(22) Anmeldetag: 09.03.2023
(51) Int. Cl.: A01D 34/00, G05D 1/00

(54) **VORRICHTUNG ZUR LOKALEN VERÄNDERUNG EINES SCHLEIFENDRAHTMAGNETFELDES UND ERDNAGEL**
DEVICE FOR LOCAL MODIFICATION OF A LOOP WIRE MAGNETIC FIELD AND EARTH NAIL
DISPOSITIF POUR MODIFIER LOCALEMENT LE CHAMP MAGNÉTIQUE D'UN FIL DE BOUCLE ET CLOU DE TERRE

(30) Priorität: 25.04.2022 DE 102022109922
(43) Veröffentlichungstag der Anmeldung: 10.07.2024
(62) Dokumentnummer(n) der früheren Anmeldung(en) nach Art. 76 EPÜ: 23161028.8 / 4 278 880
(73) Patentinhaber: AL-KO Geräte GmbH, 89359 Kötz (DE)
(72) Erfinder: Volk, Martin, 89291 Holzheim (DE); Müller, Peter, 86159 Augsburg (DE); Leissenberger, Wolfgang, 8742 Obdach (AT); Kränzele, Bernhard, 89423 Peterswörth (DE)
(74) Vertreter: Dr. Binder & Binder GbR

(56) Entgegenhaltungen:
- DE-U1- 202014 001 198
- IT-A1- 202000 003 107
- US-B2- 9 375 842

## Beschreibung

Die Erfindung betrifft eine Vorrichtung zur lokalen Veränderung eines Schleifendrahtmagnetfeldes und einen Erdnagel für ein Bodenbearbeitungsroboter-System mit einem stromleitenden Schleifendraht.

Bodenbearbeitungs- oder Mährobotersysteme, die eine durch einen Schleifendraht begrenzte Fläche nach mehr oder weniger zufälliger Fahrtrichtung ohne extern gestütztes Navigationssystem bearbeiten und dabei die Grenzen der zu bearbeitenden Fläche durch Detektion des Schleifendrahtes, genauer gesagt durch Detektion eines durch den Schleifendraht erzeugten kontinuierlichen oder wechselnden magnetischen Feldes, erkennen, sind allgemein bekannt. Der Schleifendraht dient dabei in der Regel auch dazu, den Roboter von einer beliebigen Stelle am Schleifendraht entlang zu einer Basisstation zurückzuführen. Da solche Roboter in der Regel durch Elektromotore angetrieben werden, kann dort eine Aufladung des Energiespeichers des Roboters erfolgen. Außerdem kann der Roboter, gegebenenfalls geschützt durch die Basisstation, geparkt werden.

Die Bodenbearbeitungsroboter, insbesondere Mähroboter, die eine zu bearbeitende Fläche befahren, die durch ein Schleifenkabel randseitig begrenzt ist, arbeiten nach dem Zufallsprinzip und ohne ergänzende Lokalisationstechnologie, wie Funktriangulation, Satellitennavigation oder Trägheitsnavigation.

Problematisch ist bei solchen Systemen, dass der Roboter bei jeder Rückführung auf dem identischen Weg entlanggeführt wird und meist diesen Weg auch gleichzeitig bearbeitet. Auf diese Weise entsteht eine ausgeprägte Spur entlang des Schleifendrahtes, die sich vom Rest der bearbeiteten Fläche ungewünscht unterscheidet. Weiterhin führt diese Art der Rückführung dazu, dass der Roboter zufällig auch relativ lange Wege zurücklegt, wenn er an einem ungünstigen Einstiegspunkt den Schleifendraht gefunden hat. Hierdurch wird es notwendig, bei noch relativ großem Reservevorrat an Energie die Rückführung zur Basis zum Nachladen einzuleiten. Außerdem dauert der Rückführungs- und Nachladeprozess insgesamt relativ lange. Es sind zwar Steuerungsverfahren bekannt, die diese Probleme mit Hilfe von Navigationstechniken lokaler oder globaler Art umgehen, allerdings haben diese den Nachteil, aufwendig und teuer zu sein.

Aus der Druckschrift DE 20 2014 001 198 U1 ist ein Bodennagel zum Festlegen eines Schleifendrahtes bekannt, der vorzugsweise aus Kunststoff ist und aufgrund seiner Formgebung besonders gut dazu geeignet ist, den Schleifendraht auf dem Boden zu fixieren. Eine Beeinflussung des Magnetfeldes am Schleifendraht wird nicht erwähnt.

Des Weiteren wird auf die Druckschriften IT 2020 0000 3107 A1 verwiesen. In dieser Druckschrift wird ein Rasenmährobotersystem vorgestellt, welches an Stelle von einem Schleifdraht dedizierte Magnete verwendet, um den Rasenmäher über einen im Rasenmäher verbauten Magnetometer zu steuern.

Als weiteren Stand der Technik wird noch auf die Druckschrift US 9 375 842 B2 verwiesen.

Es ist daher Aufgabe der Erfindung für ein Bodenbearbeitungsroboter-System mit einem stromleitenden Schleifendraht zur Flächenbegrenzung und zur Rückführung des Roboters ohne Verwendung eines Navigationssystems eine Vorrichtung zur lokalen Veränderung eines Schleifendrahtmagnetfeldes und einen Erdnagel hierzu vorzustellen.

Diese Aufgabe wird durch die Merkmale der unabhängigen Patentansprüche gelöst. Vorteilhafte Weiterbildungen der Erfindung sind Gegenstand untergeordneter Ansprüche.

Die Erfinder haben erkannt, dass es möglich ist, insbesondere unter Verzicht auf ein lokales oder globales Navigationssystem, ein funkbasiertes Homingsystem, ein funkbasiertes Triangulationssystem oder eines Trägheitsnavigationssystems, die Führung eines Bodenbearbeitungsroboters, insbesondere eines Mähroboters, - allgemein auch Roboter genannt - durch einen Schleifendraht zu verbessern, indem die Intensität des Magnetfeldes, welches von einem Schleifenkabel ausgeht, an geeigneten Stellen verändert wird. Dabei kann die Stärke des Magnetfeldes entweder abgeschwächt oder verstärkt werden.

Vorzugsweise kann das Magnetfeld direkt durch die räumliche Anordnung des Schleifendrahtes, vorzugsweise in Form von in den Stromfluss des Schleifendrahtes eingebrachten Windungen auf engem Raum manipuliert werden.

Beispielsweise kann dies durch entsprechende Verlegetechnik des Schleifendrahtes, welche die gewünschte Art und Anzahl an stromdurchflossenen Windungen ausbildet und damit eine lokale begrenzte Änderung des Magnetfeldes in der unmittelbaren Umgebung des Schleifendrahtes erzeugt, bewirkt werden. Zur Verstärkung der Wirkung der Drahtwindungen kann zusätzlich ein ferromagnetischer Kern in die Windungen eingebracht werden.

Alternativ kann die Manipulation des Magnetfeldes auch durch das Einbringen von vorzugsweise vorgefertigten passiven elektrischen oder elektronischen Bauteilen, insbesondere von Induktivitäten aus Magnetspulen mit und ohne Metallkern, in den Schleifendraht erfolgen. Dabei muss der Schleifendraht elektrisch so mit dem Bauteil verbunden werden, dass der Stromfluss, zumindest größtenteils, durch das eingebrachte Bauteil, insbesondere die eingebrachte Magnetspule, erfolgt. Als Metallkern kann beispielsweise auch ein Erdnagel verwendet werden, um den der Schleifendraht gewickelt wird.

Alternativ oder ergänzend kann auch eine Kapazität eingeschleift werden, deren Größe entsprechend der Frequenz und Stromstärke im Schleifendraht so gewählt werden kann, dass kein oder wenig dämpfender Einfluss auf den angelegten Wechselstrom ausgeübt wird.

Insgesamt wird durch die hier beschriebenen Manipulationen eine lokal begrenzte Änderung des durch den Schleifendraht erzeugten Magnetfeldes bewirkt, was beim Entlangfahren des Roboters am Schleifendraht zu typischen Signaländerung am gemessenen Magnetfeldsignal führt. Das Magnetfeldsignal selbst wird vom Roboter gemessen, um eine Annäherung an einen Schleifendraht zu detektieren und ihn entlang des Schleifendrahtes zu führen. Änderungen dieses Magnetfeldsignals treten auch an anderen Stellen des Schleifendrahtes auf, beispielsweise an Ecken der Schleifenverlegung. Jedoch ist es möglich die zur Markierung eingebrachten Signaländerungen so auszugestalten, dass sie sich eindeutig von den sonstigen Signaländerungen unterscheiden. Insbesondere kann auch durch mehrere aufeinander folgende Signaländerungen, erzeugt durch eine Reihen-, Parallel- oder Mischschaltung von einzelnen Markierungselementen, eine Kodierung erfolgen, die vom Roboter eineindeutig erkannt werden kann. Auch können mehrere Manipulationen beziehungsweise Markierungen des Magnetfeldes voneinander unterschieden werden.

Grundsätzlich kann ein solcher durch Markierung veränderter typischer Signalverlauf des Magnetfeldes am Schleifendraht durch die Sensoren am Mähroboter unmittelbar, also ohne vorheriges Training, jedoch vorprogrammiert, erkannt werden. Vorzugsweise wird der Roboter durch einen Kalibriervorgang auf im Schleifendraht vorhandene Markierungen mit dem jeweils typischen Signalverlauf eingelernt, diese Verläufe und/oder kennzeichnende Parameter dieser Verläufe werden abgespeichert und stehen für die darauffolgenden Erkennungen zur Verfügung.

Weiterhin kann jeder typische Signalverlauf und/oder dessen Parametersatz mit einer Aktion oder mehreren vorbestimmten Aktionen verknüpft werden, die nach Erkennung des jeweiligen Signalverlaufes zur Ausführung kommen.

Es ist hierbei zu erwähnen, dass unter den Begriffen "vorbestimmte Aktion" und "nach Erkennung" auch unterschiedliche Aktionsvarianten und mit unterschiedlichen Verzögerungszeiten jeweils in vorgegebenem Rahmen subsumiert werden können. Dies betrifft beispielsweise die etwas variable Verzögerung und den etwas variablen Winkel für das Abwenden des Roboters vom Schleifdraht, wodurch vermieden wird, dass Spuren durch häufiges Überfahren oder Bearbeiten des gleichen Fahrweges entstehen.

Es wird außerdem darauf hingewiesen, dass im Rahmen dieser Beschreibung unter "Ausführen einer Aktion" auch verstanden werden kann, dass eine im Standardverhalten des Roboters folgende Aktion dadurch unterdrückt wird. Beispielsweise kann so an einer bestimmten Stelle getriggert werden, dass der Roboter, falls er sich auf einer Rückführung zur Basisstation befindet, das Abbiegen des Schleifendrahtes ignoriert und auf dem anliegenden Kurs für eine bestimmte Zeit oder Strecke weiterfährt, bis er wieder auf den Schleifendraht stößt, dem er dann folgt. Dadurch kann beispielsweise eine Art Aussackung des zu bearbeitenden Feldes abgekürzt werden.

Im Betrieb wird also der Roboter diese vorprogrammierten oder eingelernten Signalverläufe über einen Algorithmus erkennen und die danach mindestens eine damit verknüpfte Aktion durchführen.

Eine solche typische Aktion entspricht beispielsweise eine Drehung des Roboters in das vom Schleifendraht begrenzte Feld. Wird der Schleifendraht stets im Uhrzeigersinn befahren, entspricht dies einem Schwenk nach rechts.

Bei entsprechender Positionierung der elektro-magnetischen Markierung im Schleifendraht kann erreicht werden, dass der Roboter eine Drehung in Richtung der Basisstation oder zur gegenüberliegenden Begrenzungsschleife des Feldes ausführt. Der Robotermäher bewegt sich also in diese Richtung, verkürzt damit den Weg zur Basis und vermeidet somit oben beschriebenen Nachteile des Standes der Technik.

Beispielsweise kann auch der getriggerte Kursänderungswinkel variabel einstellbar oder auch zufällig oder gezielt variierend im Rahmen vorgegebener Winkelbereiche definiert werden. Entsprechendes gilt auch für die Reaktionszeit oder -strecke nach dem Erkennen eines als Markierung dienenden typischen Signalverlaufes beim Abfahren des Schleifendrahtes.

Entsprechend dieser Grundgedanken wird ein Bodenbearbeitungsroboter-System, insbesondere ein Mähroboter-System, beschrieben, welches die folgenden Merkmale aufweist:
- eine Flächenbegrenzungsvorrichtung mit:
   -- einem stromleitenden Schleifendraht, welcher zur Begrenzung einer zu bearbeitenden Fläche und zur Rückführung des Roboters dient,
   -- einer Basisstation zur Stromversorgung, insbesondere auch des Schleifendrahtes, wobei der Schleifendraht unter vorliegender Stromversorgung ein Magnetfeld mit einer Intensität ausbildet,
   -- wobei der Schleifendraht an mindestens einer Position seiner Länge mindestens ein Mittel zur lokalen Veränderung der Intensität des erzeugten Magnetfeldes aufweist,
   -- ein autonom fahrender Bodenbearbeitungsroboter zur Bearbeitung der vom Schleifendraht umgrenzten Fläche mit:
   -- Mitteln zur Erkennung der Intensität des Magnetfeldes entlang des Schleifendrahtes,
   -- Mittel zur Erkennung eines Signalverlaufes einer sich verändernden Intensität des Magnetfeldes bei einer Bewegung entlang des Schleifendrahtes,
   -- einer Steuerung des Bodenbearbeitungsroboters, welche dazu ausgebildet ist, aufgrund einer positiven Erkennung eines vorgegebenen Signalverlaufes der Intensität des Magnetfeldes bei einer Bewegung entlang des Schleifendrahtes mindestens eine vorgegebene Aktivität auszulösen,
wobei die vorgegebene Aktivität bei der Bewegung entlang des Schleifendrahtes zumindest eine Steuerungsaktion des Bodenbearbeitungsroboters ist, mit welcher der Bodenbearbeitungsroboter die Bewegung entlang des Schleifendrahtes durch Steuerung in eine vorgegebene Richtung beendet.

Diese Aktivität oder Aktion des Beendens der Bewegung entlang des Schleifdrahtes bedeutet in anderer Weise ausgedrückt, dass der Bodenbearbeitungsroboter trotz des unveränderten Weiterverlaufens des Schleifdrahtes in gerader Richtung oder mit anhaltender Krümmung eine Richtungsänderung mit vorgegebenem Winkel ausführt oder alternativ trotz einer Richtungsänderung des Verlaufes des Schleifdrahtes auf eine Richtungsänderung verzichtet, also dieser Richtungsänderung nicht folgt und geradeaus weiterläuft beziehungsweise gesteuert wird.

Durch diese Maßnahmen ist es nun möglich, an einer oder mehreren Stellen des Schleifendrahtes durch eine Veränderung des Magnetfeldes einen Intensitätsverlauf am entlangfahrenden Roboter zu initialisieren, die der Roboter als typischen Verlauf erkennen kann und entsprechende Aktionen einleiten kann. Besonders vorteilhaft ist dabei, dass bereits bestehende Roboter, die mit einer Schleifendrahterkennung ausgestattet sind, durch einfaches Software-Update auf diese Technologie aufgerüstet werden können, wobei allerdings gleichzeitig die Manipulation des Schleifendrahtes an den gewünschten Stellen einer Markierung vorgenommen werden muss.

In einer besonderen Variante des Bodenbearbeitungsroboter-Systems wird vorgeschlagen, dass die Steuerung des Bodenbearbeitungsroboters dazu ausgebildet ist, auf unterschiedliche erkannte Signalverläufe jeweils andere und jedem Signalverlauf zugeordnete Aktivitäten auszuführen. Hierfür kann beispielsweise eine LUT (=Look-Up-Tabelle) in der Steuerung des Roboters integriert werden, welche unterschiedliche Signalverläufe und/oder deren typische Parameter zur Differenzierung der Signalverläufe enthält. Zu diesen unterschiedlichen Signalverläufen können dann jeweils ein oder mehrere zugeordnete Aktionen gespeichert werden, die die Steuerung des Roboters nach der Erkennung eines Signalverlaufes ausführt.

Vorzugsweise kann die Steuerung des Bodenbearbeitungsroboters dazu ausgebildet sein, dass der Roboter nach Erkennung eines vorgegebenen Signalverlaufes der Intensität des Magnetfeldes bei einer Bewegung entlang des Schleifendrahtes eine Richtungsänderung mit vorgegebenem Winkel ausführt. Dieser vorgegebene Winkel kann absolut vorgegeben werden, es kann aber auch ein vorgegebener Algorithmus festgelegt sein, der zufälligen oder systematischen Änderung des Winkels in einem bestimmten Winkelbereich herbeiführt. Dadurch kann die Spurbildung durch häufiges Abfahren der identischen Strecke verhindert werden.

Weiterhin kann die Steuerung des Bodenbearbeitungsroboters dazu auch ausgebildet sein, abhängig von der Ausprägung des Signalverlaufes unterschiedliche Richtungsänderungen mit vorgegebenem Winkel ausführt. Es erfolgt dabei also durch unterschiedliche induzierte Signalverläufe eine Codierung der Markierungen, wobei jedem Code ein individuell vorgegebener, gegebenenfalls in Grenzen variabler, Winkel zugeordnet ist.

In einer weiterhin vorteilhaften Ausgestaltung wird vorgeschlagen, dass die Steuerung des Bodenbearbeitungsroboter-Systems dazu ausgebildet ist, die Richtungsänderung zum Inneren der zu bearbeitenden Fläche, also zur gegenüberliegenden Seite des Schleifendrahtes, auszuführen.

Vorzugsweise wird die Steuerung des Bodenbearbeitungsroboters dazu ausgebildet, die Richtungsänderung in Richtung der Basisstation auszuführen und somit den Rückweg zu verkürzen. Hierzu gehört allerdings auch, dass die Markierung am Schleifendraht räumlich so in Relation zur jeweils individuell ausgebildeten zu bearbeitenden Fläche angebracht ist, dadurch eine verkürzte Rückführung des Roboters möglich ist.

Da der Signalverlauf des Magnetfeldes entlang eines individuell um eine Arbeitsfläche verlegten Schleifendrahtes mit großen nicht unbedingt vorhersehbaren Variationen behaftet ist, ist es besonders vorteilhaft, wenn der Bodenbearbeitungsroboter dazu ausgebildet ist, mindestens einen Signalverlauf der Intensität des Magnetfeldes bei einer Bewegung entlang des Schleifendrahtes, der eine vorgegebene Aktion initiiert, anzulernen und im System abzuspeichern, vorzugsweise zusammen mit einer spezifischen zugeordneten Aktion abzuspeichern. Damit kann die jeweils individuelle Ausprägung und Anordnung von Markierungsmitteln im Schleifendraht unter den jeweils individuellen Umgebungsbedingungen berücksichtigt werden und die Fehlerrate bei der Erkennung des jeweiligen Signalverlaufes von einer oder mehreren Markierungen stark vermindert werden.

In einer weiteren vorteilhaften Ausgestaltung des Bodenbearbeitungsroboter-System wird vorgeschlagen, dass der Schleifendraht der Flächenbegrenzungsvorrichtung über dessen Länge verteilt, mehrere Mittel zur Veränderung der Intensität des Magnetfeldes aufweist.

Hierbei können weiterhin die Mittel zur Veränderung der Intensität des Magnetfeldes am Schleifendraht in mindestens zwei Gruppen derart aufgeteilt und am Schleifendraht angeordnet werden, dass jede Gruppe einen eineindeutigen Signalverlauf der Intensität des Magnetfeldes bei einer Bewegung entlang des Schleifendrahtes und damit eine individuelle Codierung erzeugt.

Im Bodenbearbeitungsroboter-System kann mindestens ein Mittel zur Veränderung der Intensität des Magnetfeldes am Schleifendraht eine im Schleifendraht als im Stromkreis integrierte Luftspule mit einer Vielzahl von Windungen gewählt werden.

Weiterhin kann auch mindestens ein Mittel zur Veränderung der Intensität des Magnetfeldes am Schleifendraht eine im Schleifendraht als im Stromkreis integrierte Spule mit einer Vielzahl von Windungen und einem zusätzlichen ferromagnetischen Kern gewählt werden. In der einfachsten Variante kann dies durch Umwicklung eines Erdhakens mit mehreren Windungen des Schleifendrahtes geschehen.

Außerdem kann auch eine Veränderung der Intensität des Magnetfeldes am Schleifendraht durch eine in die Stromschleife eingebundene Kapazität erreicht und entsprechend detektiert werden. Dies bedingt allerdings, dass der magnetfeldbildende Stromfluss als Wechselstrom ausgebildet sein muss. Bei Gleichstrom würde eine Kapazität, also ein Kondensator, den Stromfluss unterbinden.

Soll eine Abschwächung des Magnetfeldes erreicht werden, so kann eine Abschirmung des Schleifendrahtes über eine Teilstrecke des Schleifendrahtes angeordnet werden.

Es wird darauf hingewiesen, dass es sich bei dem hier beschriebenen Bodenbearbeitungsroboter-System vornehmlich um ein System handelt, welches orientierungstechnisch ausschließlich auf die Verwendung des Schleifendrahtes abstellt und somit frei von Navigationssystemen ist, die nicht auf einem Schleifendraht basieren. Das System verfügt also nicht über Funkortsbestimmungsmittel, wie Satellitennavigation, GPS, GLOSSNAS, Bluetooth-Navigation, Funk-Triangulationsmitteln, Funk-Homingsysteme, und auch nicht über Trägheitsnavigationssysteme.

Es wird außerdem auch ein autonom fahrender Bodenbearbeitungsroboter, insbesondere ein Mähroboter, zur Verwendung mit einer Flächenbegrenzungsvorrichtung mit einem Schleifendraht mit mindestens einem Mittel zur lokalen Veränderung der Intensität des Magnetfeldes am Schleifendraht beschrieben, mit:
- Mitteln zur Erkennung der Intensität des Magnetfeldes entlang des Schleifendrahtes,
- Mittel zur Erkennung eines Signalverlaufes einer sich verändernden Intensität des Magnetfeldes bei einer Bewegung entlang des Schleifendrahtes, und
- einer Steuerung des Bodenbearbeitungsroboters, welche dazu ausgebildet ist, aufgrund einer positiven Erkennung eines vorgegebenen Signalverlaufes der Intensität des Magnetfeldes bei einer Bewegung entlang des Schleifendrahtes mindestens eine vorgegebene Aktivität auszulösen,
- wobei die vorgegebene Aktivität bei der Bewegung entlang des Schleifendrahtes zumindest eine Steuerungsaktion des Bodenbearbeitungsroboters enthält, mit welcher der Bodenbearbeitungsroboter die Bewegung entlang des Schleifendrahtes durch Steuerung in eine vorgegebene Richtung beendet.

Der Bodenbearbeitungsroboter kann dabei die oben beschriebenen roboterbezogenen Merkmale aufweisen.

Ebenfalls wird eine Flächenbegrenzungsvorrichtung vorgeschlagen, zur Verwendung mit einem autonom fahrenden Bodenbearbeitungsroboter, der
- Mittel zur Erkennung der Intensität eines Magnetfeldes entlang eines Schleifendrahtes,
- Mittel zur Erkennung eines Signalverlaufes der sich verändernden Intensität des Magnetfeldes bei einer Bewegung entlang des Schleifendrahtes, und
- eine Steuerung des Bodenbearbeitungsroboters aufweist, welche dazu ausgebildet ist, aufgrund einer positiven Erkennung eines vorgegebenen Signalverlaufes der Intensität des Magnetfeldes bei einer Bewegung entlang des Schleifendrahtes mindestens eine vorgegebene Aktivität auszulösen,
die Flächenbegrenzungsvorrichtung mit:
- einem stromleitenden Schleifendraht, welcher zur Begrenzung einer zu bearbeitenden Fläche und zur Rückführung des Roboters dient,
- einer Basisstation zur Stromversorgung, insbesondere auch des Schleifendrahtes, wobei der Schleifendraht unter vorliegender Stromversorgung ein Magnetfeld mit einer Intensität ausbildet,
- wobei der Schleifendraht an mindestens einer Position seiner Länge mindestens ein Mittel zur lokalen Veränderung der Intensität des auftretenden Magnetfeldes am Schleifendraht aufweist, welche zumindest eine vorgegebene Aktivität des Bodenbearbeitungsroboters bei der Bewegung entlang des Schleifendrahtes bewirkt, mit welcher der Bodenbearbeitungsroboter die Bewegung entlang des Schleifendrahtes durch Steuerung in eine vorgegebene Richtung beendet.

Entsprechend kann die Flächenbegrenzungsvorrichtung die oben beschriebenen schleifendrahtbezogenen Merkmale aufweisen.

Erfindungsgemäß wird von den Erfindern eine Vorrichtung zur lokalen Veränderung der Intensität des durch einen Schleifendraht erzeugten Magnetfeldes gemäß Anspruch 1 vorgeschlagen, wobei der Schleifendraht zur Begrenzung einer zu bearbeitenden Fläche und zur Rückführung des Roboters dient, aufweisend:
- eine, einen isolierten Draht umklammernde, Ummantelung aus Kunststoff,
- ein in die Ummantelung integriertes Schneid-/Isolierelement zum Durchtrennen eines durch die Ummantelung verlaufenden Schleifendrahtes,
- zwei in die Ummantelung integrierte jeweils seitlich vom Schneid-/Isolierelement angeordnete Abisolier-/Verbindungselemente,
- eine in die Ummantelung integrierte Spule, wobei eine leitende Verbindung zu jeweils einem Spulenende mit jeweils einem der beiden Abisolier-/Verbindungselemente vorliegt.

Mit einer solchen Vorrichtung kann - ähnlich, wie man sogenannte Stromdiebe in eine bestehende Leitung einklipst - auf einfache Weise eine Spule in einen Schleifendraht eingebracht werden. Hierbei wird der Schleifendraht in die Vorrichtung eingelegt, dann vorzugsweise gleichzeitig durch Betätigung der Vorrichtung der Schleifendraht getrennt und die verbleibenden Enden des Schleifendrahtes mit den Enden der Spule in der Vorrichtung verbunden. Hierzu kann eine Zange verwendet werden, welche die entsprechenden Schneid- und Verbindungselemente betätigt.

Vorteilhaft kann die Spule auch einen ferromagnetischen Kern aufweisen.

Weiterhin wird erfindungsgemäß ein Erdnagel zur Befestigung eines Schleifendrahtes am Rande einer durch einen Bodenbearbeitungsroboter zu bearbeitenden Fläche vorgeschlagen, wobei der Erdnagel zumindest teilweise aus ferromagnetischem Metall besteht und eine Spule mit einer Vielzahl von Windungen zumindest einen Teil des ferromagnetischen Metall umschließen, wobei die Spulenenden mit dem Schleifendraht so verbunden werden können, dass ein Stromfluss durch den Schleifendraht über die Spule des Erdnagel geleitet wird.

Des Weiteren wird ein Verfahren zur Rückführung eines autonom fahrenden Bodenbearbeitungsroboters vorgeschlagen, dessen zu bearbeitende Fläche durch einen Schleifendraht begrenzt und der unter Verwendung des Schleifendrahtes und eines durch den Schleifendraht erzeugten Magnetfeldes zu einer Basisstation rückgeführt wird, wobei der Roboter die Intensität des Magnetfeldes am Schleifendraht detektiert und aufgrund einer Erkennung eines vorgegebenen typischen Intensitätsverlaufes während der Bewegung entlang des Schleifendrahtes eine vorgegebene Aktion ausgelöst wird, welche bei der Bewegung des Bodenbearbeitungsroboters entlang des Schleifendrahtes zumindest eine Steuerungsaktion des Bodenbearbeitungsroboters auslöst, mit welcher der Bodenbearbeitungsroboter die Bewegung entlang des Schleifendrahtes durch Steuerung in eine vorgegebene Richtung beendet.

Die Erkennung eines typischen Intensitätsverlaufes kann beispielsweise durch Vorliegen gegebener Parameter, wie Steilheit des Signalanstieges, Mindestwertüberschreitung relativ zu einem mitlaufenden Mittelwert der vorherigen Intensitäten, etc. bestehen. Alternativ können auch Mustererkennungsverfahren, gegebenenfalls auch unter Anwendung von KI-Verfahren verwendet werden.

In einer bevorzugten Variante des Verfahrens kann auch gefordert werden, dass zur Ausführung der mindestens einen Aktion zusätzlich zur Erkennung eines vorgegebenen typischen Intensitätsverlaufes eine während der Bewegung entlang des Schleifendrahtes auch mindestens vorgegebene Betriebsbedingung vorliegen muss. Beispielsweise kann ein Schwenk zur Innenseite der durch den Schleifendraht umrandeten Fläche nur dann erfolgen, wenn der Roboter sich auf dem Rückweg zur Basisstation befindet.

Weiterhin ist es besonders vorteilhaft, wenn der vorgegebene Intensitätsverlauf zuvor angelernt oder erlernt wurde. Hierdurch kann sich das System optimal auf Besonderheiten einstellen, die abhängig von der individuellen Verlegung des Schleifendrahtes sind.

Das Verfahren kann auch so ausgestaltet sein, dass unterschiedliche Intensitätsverläufe unterschiedliche Aktionen auslösen.

Insbesondere kann mindestens eine Aktion darin bestehen, dass der Roboter zu einer vorgegebenen Zeit nach der Erkennung eines bestimmten Intensitätsverlaufes mit einem vorgegebenen Winkel vom Schleifendraht zum gegenüberliegenden Abschnitt des Schleifendrahtes oder zur Basisstation hin abbiegt.

Mindestens eine Aktion kann auch darin bestehen, dass der Roboter nach der Erkennung eines bestimmten Intensitätsverlaufes mit einem vorgegebenen Winkel vom Schleifendraht seitlich versetzt und parallel zum Schleifendraht weiterfährt.

Es wird außerdem darauf hingewiesen, dass eine Aktion auch in der Unterlassung einer Änderung bestehen kann. Beispielsweise durch nichtverfolgen des Schleifendrahtes nach einer Markierung, obwohl der Schleifendraht seine Richtung wechselt.

Im Folgenden werden bevorzugte Ausführungsbeispiele mit Hilfe der Figuren näher beschrieben, wobei nur die zum besseren Verständnis notwendigen Merkmale dargestellt sind.

Es zeigen im Einzelnen:
- FIG 1:: eine schematische Darstellung eines bekannten Bodenbearbeitungsroboter-Systems,
- FIG 2:: Signalverlauf in Abhängigkeit der Zeit,
- FIG 3:: Signalverlauf mit eindeutigen Markierungen,
- FIG 4:: eine schematische Darstellung eines Bodenbearbeitungsroboter-Systems in einer ersten Ausführungsvariante,
- FIG 5:: eine schematische Darstellung eines Bodenbearbeitungsroboter-Systems in einer weiteren Ausführungsvariante, und
- FIG 6:: eine schematische Darstellung eines Bodenbearbeitungsroboter-Systems in einer weiteren Ausführungsvariante.
Bei dem eingangs beschriebenen Bodenbearbeitungsroboter-System das ausschließlich mit dem System eines stromdurchflossenen Schleifendrahtes W zur Orientierung eine vom Schleifendraht W umfasste Fläche F arbeitet, wird das vom Schleifendraht erzeugte Magnetfeld F lokal derart manipuliert, dass die dadurch bedingte lokale Veränderung des Magnetfeldes als Markierung M, M1-M5 vom Roboter R mit dem Magnetfelddetektor D erkannt wird. Der Roboter verfügt dabei in bekannter Weise über einen Magnetfelddetektor D und eine Steuerung mit einem Prozessor und einem Speicher zum Abspeichern von Programmcode und Daten, wie einer LUT, wobei der Programmcode im Betrieb ausgeführt wird und dabei auch das oben beschriebene Verfahren ausführt. Gegenüber dem bekannten Roboter mit Schleifendrahttechnologie unterscheidet sich der Roboter somit im Wesentlichen durch die gespeicherten Daten bezüglich der Markierungserkennung und dem Programmcode, der die Markierungserkennung und die von Markierungen getriggerten Aktionen ausführt.

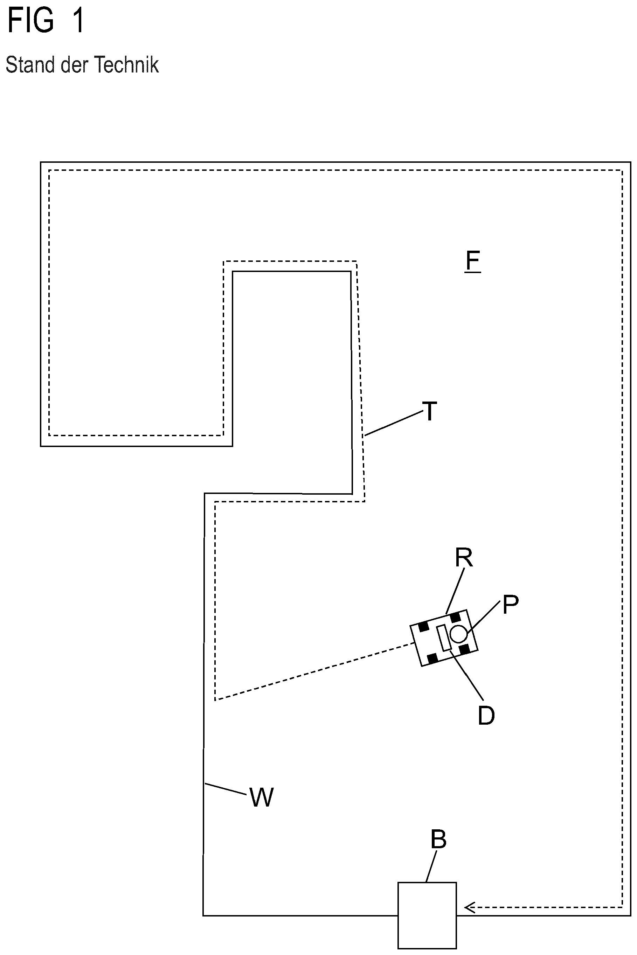

Die **Figur 1** zeigt die bekannte Situation eines Bodenbearbeitungsroboter-Systems, hier mit einem Mähroboter R, der sich ausschließlich mit Hilfe eines, die zu bearbeitende Fläche F umgebenden, Schleifendrahtes W orientiert, wenn der Roboter R aufgrund erledigter Arbeit oder aufgrund weitgehend entladener Energiezelle beginnen an einem zufälligen Ort in der Fläche F zur Basisstation zurückfinden soll. Der Roboter R behält dabei seinen zu diesem Zeitpunkt anliegenden Kurs bei, bis er irgendwann am Schleifendraht ankommt und diesen mit seinem Detektor, einem Magnetfeldsensor, erkennt. Er wendet dabei in eine vorgegebene Richtung, hier nach rechts, und folgt mangels besserer Information mit seinem Fahrweg T dem Schleifendraht W so lange, bis er die Basisstation erreicht hat. Bei grundsätzlich zufälligem Verhalten des Mähroboters R sind dabei auch sehr lange Wege in Kauf zu nehmen, wobei im statistischen Mittel etwa der halbe Umfang der Fläche F zurückgelegt werden dürfte. Hierdurch ergeben sich die oben geschilderten Nachteile, wie Spurbildung und hoher Energieaufwand für die Rückführung, der im Energiemanagement des Roboters R zu berücksichtigen ist.

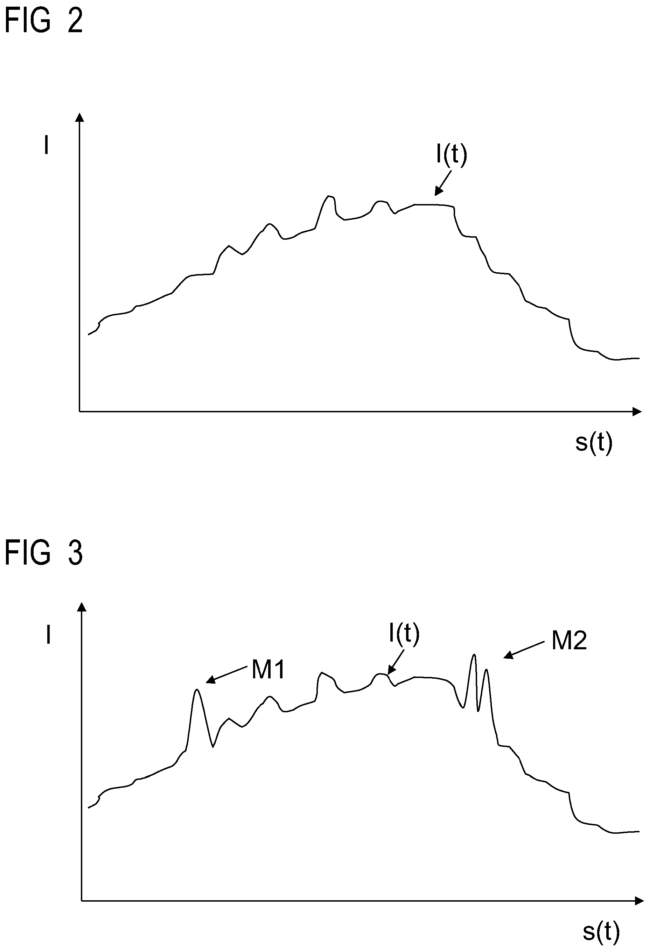

Betrachtet man die Intensität des Signals am Detektor D, so ergibt sich ein Signalverlauf I(s) über die zurückgelegte Strecke s der Roboters R entlang des Schleifendrahtes W, die wiederum entsprechend eine Funktion der Zeit ist, wie es in der **Figur 2** beispielhaft dargestellt ist. Es ist leicht zu erkennen, dass der Signalverlauf I(t) mit relativ hohen Schwankungen einhergeht.

Aufgrund gesetzlicher Bestimmungen bezüglich des EMV-Verhalten eines Schleifendrahtes ist es nicht einfach möglich beliebig starke magnetische Peaks am Schleifendraht zu induzieren, die eindeutig über dem Niveau der Intensität des magnetischen Feldes des Schleifendrahtes liegen und einfach zu detektieren wären. Es wird daher mit Intensitätsmaxima zur Markierung gearbeitet, deren Niveau relativ nahe an teilweise erreichten Intensitäten eines Schleifendrahtes ohne magnetische Markierung liegen. Um solche geringen Intensitätserhöhungen zu erkennen, werden daher BIAS-Glättungen, zum Beispiel durch Berechnung mitlaufender Mittelwerte, und/oder Mustererkennungsverfahren angewendet. In der **Figur 3** sind solche typischen Signalverläufe mit eindeutigen Markierungen M1 und M2 dargestellt. Bezüglich der Codierung mehrerer zu unterscheidender Markierung wird auf allgemein bekannte Codierungsverfahren verwiesen. Besonders günstig ist es dabei, wenn der Roboter R bei tatsächlich im Feld angebrachten Markierung bezüglich des tatsächlich vorliegenden Signalverlaufes eingelernt wird.

Werden zusätzliche Induktivitäten für die punktuelle Erhöhung des Signals in die Schleife einfügt, ist das im Prinzip für das Gesamtsystem zunächst eine Störstelle. Es sinkt das Gesamtschleifensignal ab und die maximale Größe eines Feldes F wird auch theoretisch kleiner. Es werden daher vorzugsweise relativ kleine Induktivitäten im Bereich von ca. 10 µH bis 100 µH verwendet.

Um die veränderten Signalverläufe durch eingesetzte Spulen zu erkennen, sollte dem Roboter R der tatsächliche Signalverlauf eingelernt werden, denn der Signalverlauf ist bei jeder Installation oder Schleifenlänge unterschiedlich ausgeprägt.

Für solch eine beispielhafte Kalibrierung kann der Roboter so platziert werden, dass er mindestens einen Meter vor dem zu messenden Signal auf die Schleife auffährt. Der Roboter führt dann in regelmäßigen Zeit oder Wegabständen eine Messung des Schleifensignals aus, zum Beispiel alle 100 ms. Diese Messwerte werden in einer vorgegebenen mitlaufenden Anzahl gespeichert, so dass immer ein gleich langer Ausschnitt des Schleifensignalverlaufes im Speicher liegt. Über diese abgespeicherten Werte können Glättungsalgorithmen ausgeführt werden, so dass Signalverzerrungen durch sich ändernden BIAS aufgehoben werden und zu einer besseren Erkennung typischer Signalverläufe führen.

Insbesondere können zur Erkennung bestimmter Signalverläufe typische Parameter wie, Signalmaximum oder -minimum zum BIAS, Breite eines Peaks, Integralwerte, Durchschnittswerte, etc. ermittelt und mit angelernten Werten ermittelt werden. Diese Werte können im Rahmen der Kalibrierung fest als Referenzparameter in einem Speicher des Roboters abgelegt und mit einer gewünschten Aktion verknüpft werden.

Wenn der Roboter nun die Station sucht und am Schleifenkabel entlangfährt, können diese typischen Parameter stetig berechnet und mit den abgespeicherten Referenzparametern verglichen werden. Im Falle einer Übereinstimmung in vorgegebenen Toleranzbereichen kann dies dann als positive Erkennung einer bestimmten Markierung gewertet werden und die dazu zugeordnete Aktion ausgeführt werden.

Neben dem oben geschilderten Verfahren können auch andere bekannte Signal- und Mustererkennungsverfahren verwendet werden.

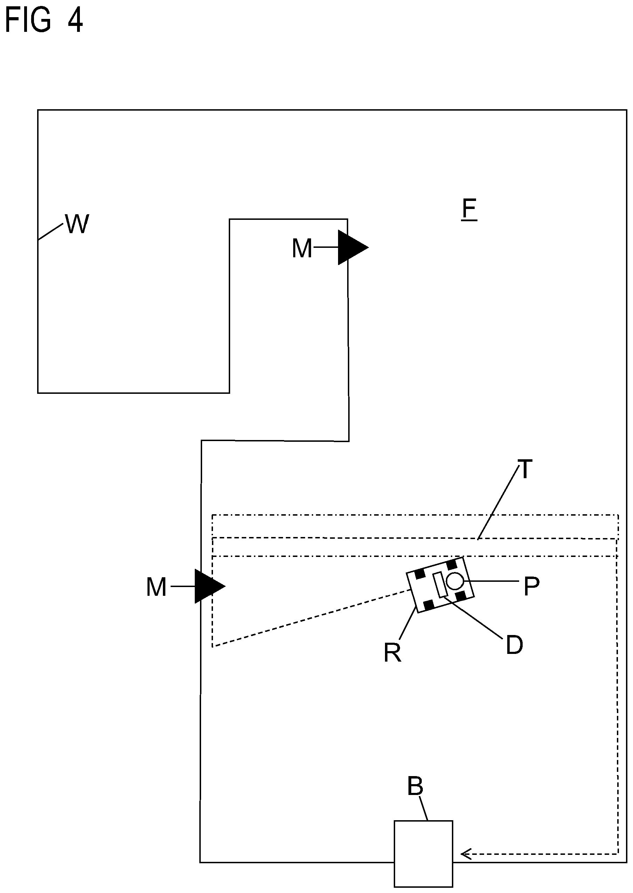

Neben der Erkennung einer Markierung und auch der Unterscheidung unterschiedlicher Markierungen ist es auch nicht unerheblich, wo im Schleifendraht bei einer gegebenen Fläche die Markierung angeordnet wird und welche Aktion des Roboters darauf erfolgt. Eine generelle Regel zur optimalen Anbringung von einer Markierung oder mehreren Markierungen in einem Schleifendraht ist schwer zu geben, da die optimale Position der Markierungen mit den entsprechenden wegabkürzenden Aktionen stark von der individuellen Ausbildung der zu bearbeitenden Fläche und gegebenenfalls dort vorhandener Hindernisse abhängt. In den Figuren 4 bis 6 werden jedoch mehrere Varianten unterschiedlicher Positionierungen der Markierungen und unterschiedliche mit den Markierungen verknüpfte Aktionen gezeigt. Bei allen Beispielen wird davon ausgegangen, dass der Roboter R den Schleifendraht W im Uhrzeigersinn abfährt.

Die **Figur 4** zeigt eine von einem Roboter R zu bearbeitende Fläche F, die durch einen Schleifendraht W umfasst wird. Die Kontur der Fläche F ist deckungsgleich mit der Fläche F aus der Figur 1 und enthält eine größere erste Teilfläche rechts und eine kleinere zweite Teilfläche links oben in Form einer Aussackung, die oben über einen Korridor miteinander verbunden sind. Der Schleifendraht W verfügt über zwei gleiche Markierungen M, die jeweils auf dem linken aufsteigenden Ast des Schleifendrahtes W angeordnet sind. Die Positionierung und Fahrtrichtung des Roboters R entspricht zu Beginn seines Fahrweges T ebenfalls der Figur 1. Sobald der Roboter R allerdings auf seinem Fahrweg T auf eine der Markierungen M trifft, wird er diese erkennen und die gespeicherte Aktion, nämlich einen Rechtsschwenk um 90° weg vom Schleifendraht W zur gegenüberliegenden Seite der Fläche F ausführen, dort wieder auf den Schleifendraht W treffen und sich entlang des Schleifendrahtes W im Uhrzeigersinn zur Basisstation B geführt werden. Konkret dargestellt ist der eine ausgewählte Fahrweg T (gestrichelte Linie) des Roboters R, der aufgrund seiner Positionierung und Fahrtrichtung gemäß Figur 1 entsteht.

Alle sonstigen Positionierungen und Fahrtrichtungen, die zu einem ersten Kontakt des Roboters R mit dem Schleifendraht W vor einer der Markierungen M führen, führen dann auch zu einer entsprechend verkürzten Rückführung des Roboters R zur Basisstation und reduzieren die Spurbildungen. In diesem Beispiel wird davon ausgegangen, dass alle Markierung die gleiche Aktion eines Rechtsschwenkes auslösen. Zur noch besseren Vermeidung von Spurbildung kann dann noch eine unterschiedliche Reaktionszeit oder ein unterschiedlicher Reaktionsweg des Roboters R für die durchgeführte Aktion einprogrammiert sein. Hier kann beispielsweise mit einem Zähler bezüglich der Anzahl der Abbiegungen oder mit einer Zufallszahl gearbeitet werden. Außerdem können entsprechend vom Mal zu Mal unterschiedliche Abbiegewinkel, zum Beispiel im Bereich von 90° +/- 10° gesteuert werden. Auch Kombinationen hiervon sind explizit möglich.

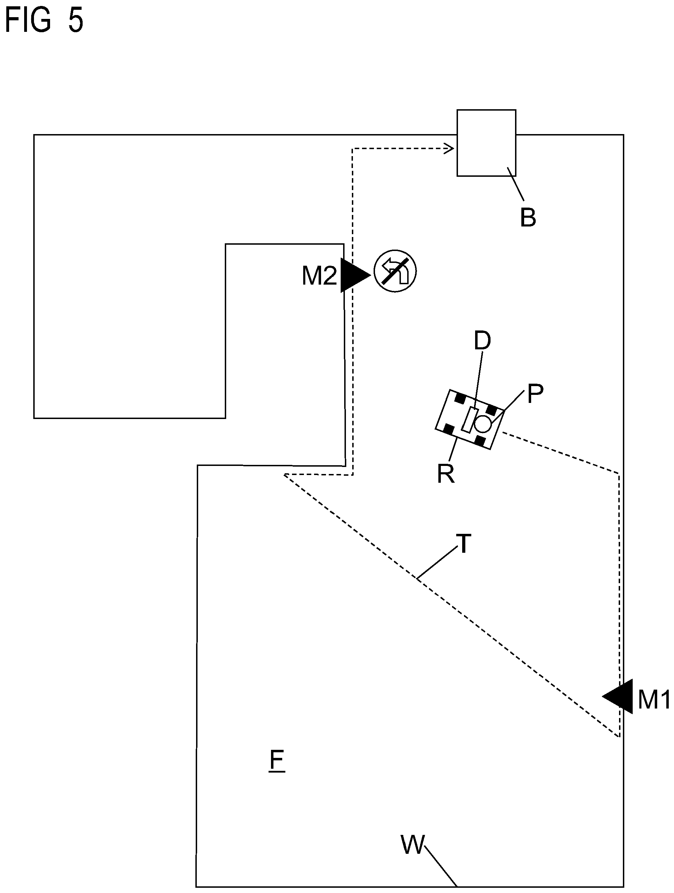

In der **Figur 5** ist nochmals die gleiche Kontur einer zu bearbeitenden Fläche F wie in den Figuren 1 und 4 gezeigt, allerdings befindet sich hier die Basisstation nicht unten in der Seitenmitte, sondern an der oberen Seite im rechten Drittel. Die Ausgangspositionierung und Ausgangsfahrtrichtung des Roboters R wurde ebenfalls geändert. Im Schleifendraht W befinden sich nun eine erste Markierung M1 mit der Zuordnung einer ersten Aktion in Form eines spitzwinkligen Rechtsschwenkes und eine zweite unterschiedliche Markierung M2 mit der Zuordnung einer zweiten Aktion. Die zweite Aktion besteht darin, dass der Roboter für eine vorgegebene Zeit oder Strecke die Führung des Schleifendrahtes ignoriert und seinen anliegenden Kurs weiterfährt, bis er wieder auf den Schleifendraht trifft und diesem dann wieder folgt.

Ein beispielhafter Fahrweg T des Roboters R mit der gezeigten Ausgangssituation ist wieder gestrichelt dargestellt. Der Roboter R trifft dabei auf seinem Weg in Richtung rechts unten (~ 04 Uhr) auf den Schleifendraht W, wird dann in Uhrzeigersinn zur nächsten Markierung M1 geführt und dort in einem spitzen Winkel zum gegenüberliegenden Schleifendraht W geschickt, wodurch schon ein wesentlicher Teil der Rückführung abgekürzt ist. Von dort geht es weiter entlang des Schleifendrahtes W zur nächsten Markierung M2. Diese ist kurz vor der Abbiegung zur zweiten Teilfläche angeordnet und bewirkt, dass der Roboter R unter Missachtung der Richtungsänderung des Schleifendrahtes W geradeaus weiter zur gegenüberliegenden Seite des Korridors geleitet wird. Dort erkennt der Roboter R wieder den Schleifendraht W und biegt rechts in Richtung der Basisstation B ab. Insgesamt wird durch diese Anordnung der Markierungen und damit verbundener Aktionen der Rückweg T des Roboters R wesentlich gegenüber einer Situation aus der Figur 1 ohne Markierungen wesentlich abgekürzt, dafür vorzuhaltende Energie eingespart und Spurbildung reduziert.

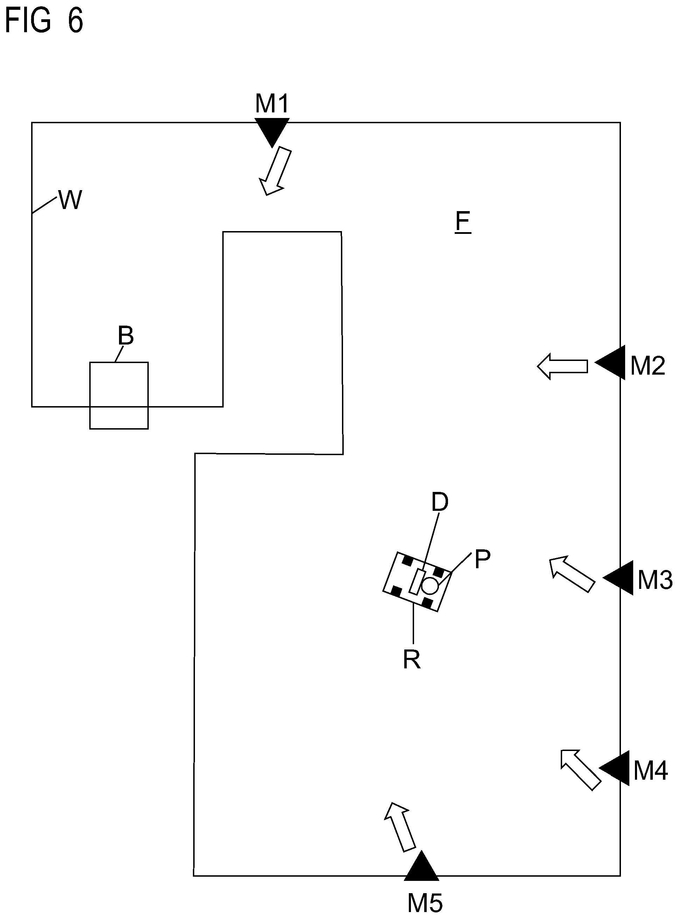

Die **Figur 6** zeigt weitere Varianten von Markierungen M1 bis M5 mit unterschiedlichen zugeordneten Aktionen an diversen Positionierungen im Schleifendraht W, wobei hier die Basisstation B in der zweiten Teilfläche angeordnet ist. Die Markierungen M1 bis M5 erzeugen jeweils ein Wegschwenken der Roboters R vom Schleifendraht W mit unterschiedlichen Winkeln, wobei diese jeweils so gewählt sind, dass eine möglichst große Verkürzung des restlichen Fahrweges zurück zur Basisstation B unter gleichzeitiger Sicherstellung, dass geringe Ungenauigkeiten im Fahrweg trotzdem sicher zu einer Auffanglinie im Schleifendraht W führen, erreicht wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der von den angehängten Ansprüchen definiert ist.

### Bezugszeichenliste

- B: Basisstation
- D: Detektor
- F: zu bearbeitende Fläche
- M, M1-M5: Markierungen oder Gruppe von Markierungen
- P: Steuerung mit Prozessor, Speicher und Programmcode
- R: Bodenbearbeitungsroboter, Mähroboter, Roboter
- W: Schleifendraht
- T: Fahrweg des Roboters

## Patentansprüche

1. Vorrichtung (M) zur lokalen Veränderung der Intensität des durch einen Schleifendraht (W) erzeugten Magnetfeldes, wobei der Schleifendraht (W) zur Begrenzung einer zu bearbeitenden Fläche und zur Rückführung des Roboters dient, aufweisend:
1.1. eine, einen isolierten Draht umklammernde, Ummantelung aus Kunststoff,
1.2. ein in die Ummantelung integriertes Schneid-/Isolierelement zum Durchtrennen eines durch die Ummantelung verlaufenden Schleifendrahtes (W),
1.3. zwei in die Ummantelung integrierte jeweils seitlich vom Schneid-/Isolierelement angeordnete Abisolier-/Verbindungselemente,
1.4. eine in die Ummantelung integrierte Spule, wobei eine leitende Verbindung zu jeweils einem Spulenende mit jeweils einem der beiden Abisolier-Nerbindungselemente vorliegt.

2. Vorrichtung (M) gemäß dem voranstehenden Patentanspruch 1, **dadurch gekennzeichnet, dass** die Spule einen ferromagnetischen Kern aufweist.

3. Erdnagel zur Befestigung eines Schleifendrahtes (W) am Rande einer durch einen Bodenbearbeitungsroboter zu bearbeitenden Fläche, **dadurch gekennzeichnet, dass** der Erdnagel zumindest teilweise aus ferromagnetischem Metall besteht und eine Spule mit einer Vielzahl von Windungen zumindest einen Teil des ferromagnetischen Metall umschließen, wobei die Spulenenden mit dem Schleifendraht so verbunden werden können, dass ein Stromfluss durch den Schleifendraht (W) über die Spule des Erdnagels geleitet wird.

## Claims

1. Device (M) for locally changing the intensity of the magnetic field generated by a loop wire (W), wherein the loop wire (W) serves to delimit an area to be maintained and to return the robot, comprising:
1.1. a plastic sheath that tightly surrounds an insulated wire,
1.2. a cutting/insulating element integrated into the sheath for cutting a loop wire (W) running through the sheath,
1.3. two stripping/connecting elements integrated into the sheath and each arranged on the side of the cutting/insulating element,
1.4. a coil integrated into the sheath, wherein there is a conductive connection between each coil end and one of the two stripping/connecting elements.

2. Device (M) according to the preceding Claim 1, **characterized in that** the coil has a ferromagnetic core.

3. Ground stake for fixing a loop wire (W) to the edge of an area to be maintained by a ground maintenance robot, **characterized in that** the ground stake is at least partially made of ferromagnetic metal and a coil with a plurality of turns surrounds at least a portion of the ferromagnetic metal, wherein the coil ends can be connected to the loop wire such that a current flow through the loop wire (W) is conducted across the coil of the ground stake.

## Revendications

1. Dispositif (M) destiné à modifier localement l'intensité du champ magnétique généré par un fil périmétrique (W), le fil périmétrique (W) servant à délimiter une surface à traiter et à guider le retour du robot, comprenant :
1.1. une gaine en matière plastique qui enserre un fil isolé,
1.2. un élément de coupe/isolation intégré dans la gaine destiné à sectionner un fil périmétrique (W) qui passe par la gaine,
1.3. deux éléments de dénudage/connexion intégrés dans la gaine, respectivement disposés sur le côté de l'élément de coupe/isolation,
1.4. une bobine intégrée dans la gaine, une connexion conductrice respectivement à une extrémité de bobine étant présente avec respectivement l'un des deux éléments de dénudage/connexion.

2. Dispositif (M) selon la revendication 1 précédente, **caractérisé en ce que** la bobine possède un noyau ferromagnétique.

3. Piquet destiné à fixer un fil périmétrique (W) au bord d'une surface à traiter par un robot de traitement du sol, caractérisé en ce sens que le piquet est au moins partiellement constitué de métal ferromagnétique et qu'une bobine comprenant une pluralité de spires entoure au moins une partie du métal ferromagnétique, les extrémités de bobine pouvant être connectées au fil périmétrique de manière à ce qu'un flux de courant à travers le fil périmétrique (W) soit guidé à travers la bobine du piquet.
